# EUROPÄISCHE PATENTSCHRIFT

(11) **EP 3 630 613 B1**
(45) Veröffentlichungstag und Bekanntmachung des Hinweises auf die Patenterteilung: **03.08.2022**
(21) Anmeldenummer: 18727783.5
(22) Anmeldetag: 25.05.2018
(51) Int. Cl.: B64F 1/36, B65G 47/68

(54) **FÖRDERVORRICHTUNG**
CONVEYOR DEVICE
DISPOSITIF DE TRANSPORT

(30) Priorität: 31.05.2017 DE 102017111995
(43) Veröffentlichungstag der Anmeldung: 08.04.2020
(73) Patentinhaber: Smiths Heimann GmbH, 65205 Wiesbaden (DE)
(72) Erfinder: SEIFERT, Alexandra, 65510 Hünstetten (DE); BUSCH, Andreas, 65207 Wiesbaden (DE)
(74) Vertreter: Klunker IP Patentanwälte PartG mbB
(86) Internationale Anmeldenummer: PCT/EP2018/063846
(87) Internationale Veröffentlichungsnummer: WO 2018/219831

(56) Entgegenhaltungen:
- EP-A1- 0 130 810
- DE-A1-102010 026 940
- DE-C1- 10 031 025
- US-A- 4 227 607

## Beschreibung

### Technisches Gebiet der Erfindung

Die vorliegende Erfindung betrifft eine Fördervorrichtung zur effizienten Zuführung einer Mehrzahl von zu inspizierenden Objekten, wie beispielsweise Gepäckstücke oder generell Stückgut, zu einer Inspektionsvorrichtung. Die Erfindung will die Effizienz der Fördervorrichtung verbessern, so dass eine Inspektion eines zu inspizierenden Objekts schnell und reibungslos von statten geht.

### Hintergrund der Erfindung

DE 100 31 025 C1 zeigt eine Vorrichtung zum Kontrollieren von Gegenständen, die Personen beim Betreten eines abgeschlossenen Bereichs mit sich führen, mit einem Kontrollbereich und einer ersten Transporteinrichtung zum Transportieren der Gegenstände von einem ersten, außerhalb des Kontrollbereichs liegenden Orte in den Kontrollbereich hinein und einer zweiten Transporteinrichtung zum Transportieren der Gegenstände von einem zweiten, ebenfalls außerhalb des Kontrollbereichs liegenden, nicht aber mit dem ersten Orte zusammenfallenden Orte in den Kontrollbereich hinein.

US 4,227,607 A zeigt ein Verfahren und ein System zum Transportieren von Artikeln, wie beispielsweise Koffer oder Gepäckstücke.

EP 0 130 810 A1 zeigt ein Gepäckbeförderungsband mit einem Hauptförderungsband und Nebenförderungsbändern.

DE 10 2010 026 940 A1 zeigt eine Vorrichtung zum Prüfen von Handgepäck und anderen von Personen mitgeführten Gegenständen aufweisend ein Prüfgerät, einen weiteren Förderer sowie eine Auflagefläche.

WO 02/29744 A zeigt Vorrichtungen zur Erfassung von Passagieren auf Flughäfen, wobei nach der Erfassung von Passagier und Gepäck diese auf dem Weg bis zum Flugzeug oder Ausgang mittels Rechenanlage verfolgt werden und gegebenenfalls Alarm ausgelöst wird, wenn der Passagier einen vorbestimmten Bereich verlässt oder eine gesuchte Person ist oder sein Gepäck unbegleitet versenden will.

EP 2 168 873 A2 zeigt ein System für einen Flugpassagier, der ein Gepäckstück mit sich führt. Er gibt dieses Gepäckstück üblicherweise an einem Check-In-Schalter eines Abflughafens auf und holt das Gepäckstück nach Beendigung des Fluges an einem Gepäckförderband eines Ankunftsflughafens wieder ab. Sicherheitskontrollen von Personen beim Zugang zu bestimmten Infrastrukturen, wie beispielsweise dem Abflugbereich von Flughäfen oder Gebäuden mit höheren Sicherheitsanforderungen (z. B. Gerichte, Gefängnisse, Diamantenminen etc.), oder im Rahmen von Großveranstaltungen (z. B. Konzerte, Sportveranstaltungen, etc.) sind bekannt. Dabei passieren Personen einen Übergangsbereich (oft Checkpoint oder Kontrollstelle genannt), an dem die Personen und ggf. vorhandenes Handgepäck beispielsweise auf verdeckt unter der Kleidung getragene bzw. am oder im Körper verborgene gefährliche oder verbotene Gegenstände oder Substanzen kontrolliert werden. Für weitere Einzelheiten bekannter Maßnahmen sei beispielsweise auf die DE 10 2006 036 108 A1 verwiesen.

Üblicherweise werden dabei das Handgepäck, Jacken, Schuhe und andere Gegenstände, die der Passagier bei sich trägt, separat zur Personenkontrolle mittels Röntgeninspektion untersucht. Dabei werden Gegenstände und Substanzen im Inneren beispielsweise des Handgepäcks sichtbar gemacht, um so das Handgepäck (als Inspektionsobjekt) zerstörungslos auf verborgene bzw. versteckte gefährliche Inhalte, wie Waffen, verbotene Gegenstände oder gefährliche Substanzen zu kontrollieren.

Bei bekannten Sicherheitskontrollen ist es besonders notwendig, dass nicht lediglich die technischen Vorrichtungen an sich effizient arbeiten, sondern vielmehr sind die technischen Vorrichtungen derart auszugestalten, dass auch die Passagiere Möglichkeit finden, ihre Gepäckstücke möglichst effizient einer Kontrolle zuzuführen. Hierbei sind technische Überlegungen notwendig, welche darauf abstellen, dass einer Vielzahl von Passagieren die Möglichkeit gegeben wird, mehrere Gepäckstücke abzulegen und gegebenenfalls bei einer Nachkontrolle effizient an der Inspektion von Gepäckstücken mitwirken zu können.

Hierbei ist es dringend notwendig, dass technische Überlegungen genau auf das Inspizieren von Gepäckstücken abstellen, da beispielsweise ein Förderband in einem Lagerhaus ganz unterschiedlichen Restriktionen unterliegt und insbesondere hierbei typischerweise ein menschliches Verhalten keine Rolle spielt. So sind generell Fördervorrichtungen bekannt, welche jedoch nicht ohne Einschränkung in der Personenkontrolle bzw. in der Gepäckkontrolle Wiederverwendung finden können. Die bekannten Kontrollstellen stellen hinsichtlich des Gepäckdurchsatzes und des Personendurchsatzes einen Flaschenhals dar, da Nachkontrollen immer mehr Zeit benötigen als die automatische Kontrolle durch die Inspektionsvorrichtungen.

### Allgemeine Beschreibung der Erfindung

Es ist daher eine Aufgabe der vorliegenden Erfindung eine Fördervorrichtung bereitzustellen, welche es ermöglicht, dass eine Mehrzahl von Inspektionsobjekten, wie z.B. Gepäckstücke, effizient eine Sicherheitskontrolle, wie z. B. eine Inspektionsvorrichtung, durchlaufen kann und insbesondere, dass die Mehrzahl von zu inspizierenden Inspektionsobjekten reibungslos der Inspektionsvorrichtung zugeführt werden kann. Es ist ferner eine Aufgabe nicht gemäß der vorliegenden Erfindung ein Verfahren vorzuschlagen, welches die vorgeschlagene Fördervorrichtung betreibt. Ferner soll nicht gemäß der vorliegenden Erfindung ein Computerprogrammprodukt vorgeschlagen werden, mit Steuerbefehlen, welche geeignet sind das Verfahren auszuführen bzw. die Fördervorrichtung zu betreiben, wenn sie auf einem Computer zur Ausführung gebracht werden.

Die Aufgabe der Erfindung wird mit den Merkmalen des Anspruchs 1 gelöst. Ausführungsbeispiele und vorteilhafte Weiterbildungen sind in den Unteransprüchen 2-13 definiert.

Hierbei gelten Merkmale und Einzelheiten, die in Zusammenhang mit den erfindungsgemäßen Vorrichtungen und dem erfindungsgemäßen System beschrieben sind, selbstverständlich auch in Zusammenhang mit den jeweiligen Verfahren nicht gemäß der Erfindung entsprechend und jeweils umgekehrt. Daher wird bezüglich der Offenbarung wechselseitig Bezug genommen.

Demgemäß wird ein System gemäß Anspruch 1 vorgesehen.

Bevorzugt ist die Inspektionsvorrichtung eingerichtet, Inspektionsobjekte zerstörungsfrei mittels elektromagnetischer Strahlung zu bestrahlen und dabei zu durchstrahlen, um basierend auf der vom Inspektionsobjekt nicht absorbierten Strahlung Informationen, bevorzugt in Form von Transmissionsbildern, über das Innere des Inspektionsobjekt zu gewinnen, die ein Auffinden von Zielgegenständen oder Zielsubstanzen im Inspektionsobjekt ermöglichen. Eine Inspektionsvorrichtung kann beispielsweise eine Röntgeninspektionsanlage sein.

Nicht gemäß der vorliegenden Ertindung bezieht sich ein zu inspizierendes Inspektionsobjekt auf jegliches Stückgut. Dabei kann es sich um tragbare Frachtstücke jeglicher Art handeln, wie z. B. Pakete, Postsäcke, usw. Gemäß der Erfindung handelt es sich um ein Gepäckstück, welches typischerweise in einem Handgepäck von Passagieren mitgeführt wird. Hierbei kann es sich also auch um Kleidungsstücke oder Taschen handeln. Somit kann ein Inspektionsobjekt generell als jeglicher Gegenstand vorliegen, wobei die Bezeichnung Inspektionsobjekt hier darauf abstellt, dass es sich um einen, bevorzugt von einer Person, tragbaren Gegenstand, insbesondere einen Gegenstand des täglichen Lebens, wie eben z. B. ein Gepäckstück, handelt. Grundsätzlich kann jeder tragbare Gegenstand ein Inspektionsobjekt sein, z. B. ein tragbarer Computer, ein Fotoapparat, oder auch ein Kleidungsstück usw. sein.

Eine Mehrzahl von zu inspizierenden Inspektionsobjekten liegt beispielsweise an Flughäfen vor. An einem Check-Point legen üblicherweise eine Vielzahl von Passagieren jeweils ihre Gepäckstücke (als Inspektionsobjekte) auf ein Förderband. Die Gepäckstücke werden danach von dem Förderband einer Inspektionsvorrichtung, die zur zerstörungslosen Inspektion des von außen nicht sichtbaren Inhalts der Gegenstände mittels Durchleuchten z.mittels Röntgenstrahlen eingerichtet ist, zugeführt und durchlaufen diese. Ein solches Durchleuchten kann gemäß herkömmlichen Verfahren implementiert werden und kann beispielsweise eine Röntgeninspektionsvorrichtung, auch of kurz (Röntgen-)Scanner genannt, verwenden. Hierzu kennt der Fachmann bereits eine Vielzahl an Scannern für eine solche Inspektion vornehmen. Hierbei ist es jedoch nicht ausgeschlossen, dass die Inspektion dennoch ein menschliches Zutun erfordert, beispielsweise falls entsprechende Gegenstände nicht mittels bildverarbeitender Verfahren analysiert werden können. Hierzu ist es möglich, dass die Inspektionsvorrichtung oder eine Bedienperson der Inspektionsvorrichtung einen menschlichen Mitarbeiter konsultiert, der dann eine manuelle Inspektion des Inspektionsobjekts durchführt, um abschließend ein Inspektionsergebnis festzustellen; dies kann auch ein wiederholtes auch mehrmaliges Durchleuchten mit der Inspektionsvorrichtung einschließen.

Eine effiziente Zuführung liegt genau dann vor, falls eine Vielzahl von Passagieren ihre Inspektionsobjekte möglichst parallel derart zur Verfügung stellen, dass sich ein sequenzieller Strom von Inspektionsobjekten ergibt, welcher der Inspektionsvorrichtung zugeführt wird. Hierbei sollte idealerweise ein möglichst zusammenhängender Strom von Inspektionsobjekten entstehen, sodass die Inspektionsvorrichtung besonders vorteilhaft ausgelastet wird. Ein solcher, idealerweise möglichst konstanter, Strom von Inspektionsobjekten liegt dann nicht vor, falls es Lücken zwischen Inspektionsobjekten gibt. Solche Lücken zwischen Inspektionsobjekten verursachen, dass das entsprechende Förderband teilweise leer, also ohne Inspektionsobjekte, durch die Inspektionsvorrichtung läuft. Dies wird erfindungsgemäß dadurch überwunden, dass weitere Förderbandeinrichtungen vorgesehen werden.

Die Hauptförderbandeinrichtung kann gemäß einem herkömmlichen Förderband ausgestaltet werden, welches durch eine an sich bekannte Inspektionsvorrichtung hindurch verläuft und automatisch oder manuell angehalten oder weiterbewegt werden kann. Somit führt die Hauptförderbandeinrichtung der Inspektionsvorrichtung Inspektionsobjekte zu und führt diese nach erfolgter Inspektion aus der Inspektionsvorrichtung heraus. Bei der Inspektion des Inspektionsobjekts in der Inspektionsvorrichtung kann das Inspektionsobjekt durch entsprechende automatische oder manuelle Steuerung des Förderbandes bei Bedarf angehalten oder auch in entgegengesetzter Richtung bewegt werden.

Eine sequenzielle Zuführung der Mehrzahl von zu inspizierenden Inspektionsobjekten stellt darauf ab, dass die Inspektionsobjekte entlang der Hauptförderbandeinrichtung in die Inspektionsvorrichtung geleitet werden, wobei dem auch nicht entgegensteht, dass die Inspektionsobjekte beispielsweise mittels Aufnahmevorrichtungen, wie beispielsweise Wannen, gruppiert werden, d .h. gruppenweise zusammengefasst werden.

Im Rahmen der vorliegenden Erfindung soll eine sequenzielle Zuführung von Inspektionsobjekten auch dann vorliegen, falls in einer Wanne mehrere Inspektionsobjekte orthogonal zur Transportrichtung zum Liegen kommen. Hierbei stellt die sequenzielle Zuführung darauf ab, dass auch mehrere Wannen in einer Reihe die Inspektionsvorrichtung durchlaufen. Somit gilt die sequenzielle Zuführung als dann erfolgt, falls eine Mehrzahl von zu inspizierenden Inspektionsobjekten linear bzw. im Wesentlichen linear die Inspektionsvorrichtung durchläuft.

Erfindungsgemäß wurde überraschenderweise erkannt, dass es nicht die technischen Vorrichtungen an sich sind, welche eine Bearbeitung der Inspektionsobjekte verzögern, sondern vielmehr fehlt es lediglich an technischen Mitteln, die es den Passagieren erlauben effizient die Inspektionsobjekte bereitzustellen. Hierbei wurde ebenfalls überraschenderweise erkannt, dass die sequenzielle Zuführung von Inspektionsobjekten an die Inspektionsvorrichtung typischerweise Lücken aufweist, die zu einer Verzögerung der Inspektion führen.

Dieser Nachteil wird erfindungsgemäß dadurch überwunden, dass mindestens eine Nebenförderbandeinrichtung vorgeschlagen wird, die in die Hauptförderbandeinrichtung mündet. Auf diese Art und Weise ist es möglich, der Hauptförderbandeinrichtung weitere Inspektionsobjekte derart zuzuführen, dass ein möglichst kontinuierlicher Strom an Inspektionsobjekten entsteht. Die Nebenförderbandeinrichtung ist derart an die Hauptförderbandeinrichtung angeschlossen, dass weitere Inspektionsobjekte in die sequenzielle Zuführung einbringbar sind. Somit ist es also den Passagieren ermöglicht, dass sie Inspektionsobjekte sowohl auf die Hauptförderbandeinrichtung direkt ablegen oder aber, dass diese die Nebenförderbandeinrichtungen nutzen, welche dann die bereitgestellten Inspektionsobjekte in die sequenzielle Zuführung durch die Hauptförderbandeinrichtung einordnen.

Bevorzugt können zusätzlich Sensoren eingesetzt werden, welche dazu eingerichtet sind zu erkennen, dass auf der Hauptförderbandeinrichtung eine Lücke entsteht und entsprechend Inspektionsobjekte aus der Nebenförderbandeinrichtung einsortiert werden können. Das können beispielsweise optische bzw. bildgebende Sensoren sein, die sich oberhalb der vorgeschlagenen Fördervorrichtung befinden, und/oder zur Fördervorrichtung ortsfeste kapazitive oder induktive Näherungssensoren unter der Fördervorrichtung sein. Diese Sensorik kann die sequenzielle Zuführung der Inspektionsobjekte überwachen und weitere Inspektionsobjekte weiterer Nebenförderbandeinrichtungen in den Hauptstrom einfügen. Hierdurch wird gewährleistet, dass typischerweise auch bei hohem Passagieraufkommen die Inspektionsobjekte lückenlos der Inspektionsvorrichtung zugeführt werden.

Hierbei ist es möglich entweder die Hauptförderbandeinrichtung oder eine der Nebenförderbandeinrichtungen derart zu priorisieren, dass Inspektionsobjekte einer dieser Einrichtungen bevorzugt behandelt werden können. So ist es beispielsweise möglich bei Passagieren aus der Bordkarte auszulesen, wann der Abflug angesetzt ist. In Abhängigkeit einer solchen Zeitangabe kann dann das jeweilige Inspektionsobjekt bzw. die entsprechende Förderbandeinrichtung priorisiert oder aber auch verzögert werden. Somit wird erfindungsgemäß bewerkstelligt, dass einige späte Passagiere ihr Gepäck an der Handgepäckkontrolle schneller erhalten als Passagiere, die frühzeitig eingetroffen sind.

Erfindungsgemäß wird ferner der Nachteil überwunden, dass bei einem besonders langen Förderband diverse Lücken entstehen. So ist es beispielsweise bekannt, die Möglichkeiten für Passagiere Inspektionsobjekte abzulegen dadurch zu erhöhen, dass ein besonders langes Förderband bereitgestellt wird, welches beispielsweise einen Halbkreis derart ausformen, dass die Passagiere entlang der halbkreisförmig ausgestalteten Förderbandeinrichtung Inspektionsobjekte ablegen können. Da hierbei jedoch lediglich die Länge des Förderbands maximiert wird, kommt es bei geringem Passagieraufkommen wiederum zu den Lücken im sequenziellen Strom der Inspektionsobjekte, was zu vermeiden ist.

Erfindungsgemäß ist es möglich mindestens eine der Nebenförderbandeinrichtungen genau dann hinzu zuschalten, falls sich das Passagieraufkommen erhöht. Verringert sich das Passagieraufkommen wieder, so kann die zugeschaltete Nebenförderbandeinrichtung wiederum deaktiviert werden. Somit ist es ein Aspekt der vorliegenden Erfindung, dass die vorgeschlagene Fördervorrichtung nach einem aktuellen Passagieraufkommen derart skalierbar ist, dass entsprechend weitere Nebenförderbandeinrichtungen hinzugeschaltet bzw. deaktiviert werden können.

Bei einer Förderbandeinrichtung der vorliegenden Erfindung wird darauf abgestellt, dass eine länglich ausgestaltete Transporteinrichtung vorliegt, welche typischerweise mittels eines Förderbands umgesetzt wird. Hierbei ist jedoch eine Förderbandeinrichtung derart zu verstehen, dass lediglich eine längliche Transportstrecke bewältigt werden muss. Somit ist ein Synonym für Förderbandeinrichtung im Rahmen der vorliegenden Erfindung beispielsweise eine Transporteinrichtung. So ist es beispielsweise bekannt, dass ein Förderband nicht mittels eines einstückigen Bandes implementiert wird, sondern ein solches Förderband kann auch mittels einzelner Segmente bzw. Lamellen bereitgestellt werden. Somit ist also eine Förderbandeinrichtung bildlich beschrieben und umfasst erfindungsgemäß jegliche Transporteinrichtung, die geeignet ist, Gepäckstücke als zu inspizierende Inspektionsobjekte, sequenziell einer Inspektionsvorrichtung zuzuführen.

Gemäß einem Aspekt der vorliegenden Erfindung können mindestens zwei Nebenförderbandeinrichtungen vorgesehen werden, welche derart versetzt bezüglich der Hauptförderbandeinrichtung angeordnet sind, dass diese die jeweils weiteren Inspektionsobjekte an unterschiedlichen Abschnitten der Hauptförderbandeinrichtung einbringen. Dies hat den Vorteil, dass mehrere Nebenförderbandeinrichtungen bereitgestellt werden können, welche an unterschiedlichen Stellen in dem Strom der Inspektionsobjekte weitere Inspektionsobjekte einordnen. Insbesondere ist es jedoch möglich, dass einer Hauptförderbandeinrichtung zeitgleich an mehreren Abschnitten unterschiedliche Inspektionsobjekte zugeführt werden können. Dies ist von beiden Seiten der Hauptförderbandeinrichtung möglich, sodass vermieden wird, dass in dem kontinuierlichen Strom der Inspektionsobjekte Lücken entstehen. Diese werden erfindungsgemäß besonders effizient aufgefüllt.

Gemäß einem weiteren Aspekt der vorliegenden Erfindung können die Hauptförderbandeinrichtung und die mindestens eine Nebenförderbandeinrichtung derart zueinander beabstandet angeordnet sein, dass diese jeweils zumindest teilweise von mindestens zwei Seiten für mindestens jeweils einen Passagier zugänglich sind. Dies hat den Vorteil, dass die jeweiligen Förderbandeinrichtungen nicht angrenzend aneinander angeordnet sind, sondern, dass die Förderbandeinrichtungen derart beabstandet sind, dass eine Vielzahl von Passagieren gleichzeitig auf die unterschiedlichen Förderbandeinrichtungen zugreifen kann.

Somit wird sichergestellt, dass die Passagiere Zugang zu den Förderbandeinrichtungen derart bekommen, dass sie beispielsweise von beiden Seiten der Förderbandeinrichtung Inspektionsobjekte auf diese auflegen können. Somit ist es also möglich, alle Förderbandeinrichtungen gleichzeitig zu belegen. Auch können die Förderbandeinrichtungen derart ausgestaltet werden, dass diese von drei Seiten zugänglich sind. Hierzu können die beiden Längsseiten der Förderbandeinrichtungen verwendet werden, sowie das Kopfende einer Förderbandeinrichtung. Hierbei kann eine Förderbandeinrichtung derart ausgestaltet werden, dass das Förderband bzw. die einzelnen Segmente verdeckt von der Inspektionsvorrichtung hinweg laufen und an der Oberfläche in Richtung der Inspektionsvorrichtung verlaufen. Somit entsteht also ein zugängliches Kopfende, das die Passagiere zur Ablage der Inspektionsobjekte verwenden können.

Gemäß einem weiteren Aspekt der vorliegenden Erfindung können die Hauptförderbandeinrichtung und die mindestens eine Nebenförderbandeinrichtung jeweils unabhängig voneinander in ihrer Fördergeschwindigkeit variierbar sein. Die Geschwindigkeit bezieht sich insbesondere auf die Transportgeschwindigkeit, mit der die Inspektionsobjekte bewegt werden können. So ist es beispielsweise möglich, dass das Hauptförderband bzw. die Hauptförderbandeinrichtung schneller betrieben wird als eine Nebenförderbandeinrichtung. Somit kann wiederum auf das jeweilige Passagieraufkommen Rücksicht genommen werden.

Gemäß einem weiteren Aspekt der vorliegenden Erfindung sind die Hauptförderbandeinrichtung und die mindestens eine Nebenförderbandeinrichtung jeweils derart in ihrer Transportgeschwindigkeit variierbar, dass auf der Hauptförderbandeinrichtung eine möglichst fortlaufende Sequenz von zu inspizierenden Inspektionsobjekten entsteht. Dies hat den Vorteil, dass die Nebenförderbandeinrichtungen langsamer oder schneller betrieben werden können, je nachdem ob sich auf der Hauptförderbandeinrichtung eine Lücke in den Inspektionsobjekten befindet. So kann bei einem Detektieren einer Lücke auf der Hauptförderbandeinrichtung eine Nebenförderbandeinrichtung derart beschleunigt werden, dass das Inspektionsobjekt schnell zu dieser Lücke transportiert wird. Wird hingegen keine Lücke auf der Hauptförderbandeinrichtung detektiert, so kann die entsprechende Nebenförderbandeinrichtung derart verlangsamt werden, dass das Inspektionsobjekt auf eine Lücke in der Hauptförderbandeinrichtung wartet. Somit kann in besonders effizienter Weise eine fortlaufende Sequenz von zu inspizierenden Inspektionsobjekten erzeugt werden. Auch können mehrere Nebenförderbandeinrichtungen gezielt mit unterschiedlichen Geschwindigkeiten betrieben werden, um beispielsweise die oben genannte Priorisierung von bestimmten Inspektionsobjekten zu ermöglichen.

Gemäß einem weiteren Aspekt der vorliegenden Erfindung werden zu inspizierende Inspektionsobjekte mittels Wannen gruppenweise zusammengefasst und eine Wannenrückführungseinrichtung bewegt die Wannen im Wesentlichen in entgegengesetzter Transportrichtung zur Hauptförderbandeinrichtung. Dies hat den Vorteil, dass generell als Inspektionsobjekte auch Gruppen von Inspektionsobjekten gelten können, welche beispielsweise mittels Taschen oder Wannen zusammengefasst werden. Hierbei ist eine automatische Wannenrückführungseinrichtung vorgesehen, die entgegen bekannter Verfahren die Wannen von der Hauptförderbandeinrichtung weg bewegt. Dies kann derart erfolgen, dass entweder leere Wannen zu den Passagieren zurückbefördert werden oder aber auch Wannen, welche Inspektionsobjekte aufweisen, die mit negativem Ergebnis inspiziert wurden einem Kontrollpersonal zugeführt werden. Gemäß der vorliegenden Erfindung handelt es sich bei einer im Wesentlichen entgegengesetzter Transportrichtung um eine entgegengesetzte Transportrichtung (Rückführvorrichtung), wobei der Fachmann erkennt, dass hierbei kleine Abweichungen möglich sind. Somit ist generell im Kontext der vorliegenden Erfindung das Merkmal "im Wesentlichen" optional. Beispielsweise kann auch die Transportrichtung in einem spitzen Winkel zur Transportrichtung der Hauptförderbandeinrichtung stehen.

Gemäß einem weiteren Aspekt der vorliegenden Erfindung kann für jede Förderbandeinrichtung eine gesonderte Wannenrückführungseinrichtung vorgesehen sein. Dies hat den Vorteil, dass sowohl für die Hauptförderbandeinrichtung als auch für die mindestens eine Nebenförderbandeinrichtung jeweils separate Wannenrückführungseinrichtungen vorgesehen sind. Somit haben also die Passagiere tatsächlich auch die Möglichkeit nicht nur ihre Inspektionsobjekte auf der entsprechenden Förderbandeinrichtung abzulegen, sondern vielmehr erhalten die Passagiere eben auch die Wannen, welche typischerweise vorgeschrieben werden um einzelne Inspektionsobjekte handhabbar transportieren zu können.

Gemäß einem weiteren Aspekt der vorliegenden Erfindung kann sich an die Inspektionsvorrichtung eine Inspektionsobjektumleitungseinrichtung anschließen oder an diese gekoppelt sein, welche eingerichtet ist, Inspektionsobjekte bei negativem (oder nicht eindeutig positivem) Inspektionsergebnis von der Hauptförderbandeinrichtung abzuleiten. Dies hat den Vorteil, dass bei einem negativen Inspektionsergebnis die Inspektionsobjekte von der Hauptförderbandeinrichtung derart abgezogen werden können, dass sie nicht mehr dem Passagier zugänglich sind oder gemacht werden. Somit wird ein negativ inspiziertes Inspektionsobjekt nicht an den Passagier ausgegeben, sondern vielmehr wird dies automatisch umgeleitet und vor dem Zugriff durch den Passagier bewahrt. Ein negatives Inspektionsergebnis liegt dann vor, falls ein Inspektionsobjekt ein Gefahrenpotenzial aufweist oder zumindest nicht inspizierbar ist. Ebenfalls wird damit sichergestellt, dass Inspektionsobjekte mit negativem oder unklarem (nicht eindeutig positivem) Inspektionsergebnis nicht zu einem Stau auf der Hauptförderbandeinrichtung führen.

Gemäß einem weiteren Aspekt der vorliegenden Erfindung kann für die Ableitung eine Rückförderbandeinrichtung als Rückführvorrichtung an die Inspektionsobjektumleitungseinrichtung gekoppelt sein. Dies hat den Vorteil, dass das jeweilige Inspektionsobjekt weiter weg vom Passagier bewegt wird und in eine Position verbracht wird, in der es weiter, beispielswiese manuell, inspiziert werden kann. Dies kann derart erfolgen, dass eine Rückförderbandeinrichtung parallel zur Hauptförderbandeinrichtung vorgesehen ist, die in entgegengesetzter Richtung verläuft.

Gemäß einem weiteren Aspekt der vorliegenden Erfindung kann die Rückförderbandeinrichtung eingerichtet sein, Inspektionsobjekte entgegen der Transportrichtung der Hauptförderbandeinrichtung wieder vor die Inspektionsvorrichtung zur erneuten Inspektion zu fördern. Dies hat den Vorteil, dass negativ oder nicht eindeutig positive inspizierte Inspektionsobjekte entweder einem Sicherheitspersonal zugeführt werden können oder aber eine erneute maschinelle Inspektion in der Inspektionsvorrichtung erfolgt. Dies kann beispielsweise dann erfolgen, falls eine eindeutige Inspektion des Inspektionsobjekts, beispielsweise aufgrund von Überlagerungen zweier Inspektionsobjekte, nicht möglich war.

Gemäß einem weiteren Aspekt der vorliegenden Erfindung kann die Rückförderbandeinrichtung eine Ausgabestelle zur manuellen Inspektion von Inspektionsobjekten umfassen. Dies hat den Vorteil, dass es eine Möglichkeit gibt, die negativ inspizierten Inspektionsobjekte anzuhalten, derart dass ein Sicherheitspersonal das Inspektionsobjekt manuell inspizieren kann oder aber, dass das Inspektionsobjekt dem Passagier vorgelegt werden kann.

Gemäß einem weiteren Aspekt der vorliegenden Erfindung kann die Inspektionsvorrichtung mehrere Inspektionseinheiten, welche jeweils zur Inspektion mindestens eines Inspektionsobjekts eingerichtet sind, umfassen. Dies hat den Vorteil, dass der kontinuierliche Strom von Inspektionsobjekten tatsächlich auch durch mehrere Inspektionseinheiten inspiziert werden kann, derart, dass wiederum keine Verzögerung entsteht. So kann beispielsweise ein einziger abgeschirmter Kanal vorgesehen werden, der mehrere Inspektionseinheiten umfasst. Beispielsweise können in einen Kontrollkanal drei Inspektionsobjekte eingeführt werden, wobei drei Inspektionseinheiten jeweils ein Inspektionsobjekt durchleuchten. Somit ist es also möglich bezüglich einer einzelnen Inspektionsvorrichtung zeitgleich mehrere Inspektionsobjekte zu kontrollieren. Dies ist im Kontext der vorliegenden Erfindung besonders deshalb vorteilhaft, da die Inspektionsvorrichtung von mehreren Förderbandeinrichtungen gespeist wird.

Gemäß einem weiteren Aspekt der vorliegenden Erfindung können die Inspektionsvorrichtungen sowie ggf. entsprechend die Inspektionseinheiten entfernt angesteuert und gesteuert werden, wobei für jedes Inspektionsobjekt entfernt ein positives oder ein negatives Inspektionsergebnis übermittelt werden. Dies hat den Vorteil, dass die einzelnen Inspektionsvorrichtungen oder Inspektionseinheiten kommunikativ mit einem oder mehreren Arbeitsplätzen gekoppelt sein können. Beispielsweise können die Kontrolleinheiten netzwerktechnisch mit Computern von Inspektionspersonal verbunden sein, die dann entfernt die Inspektionsobjekte bzw. Abbilder von den Inspektionsobjekten durch Begutachtung inspizieren. Hierbei ist es ferner möglich, dass das entfernte Kontrollpersonal von einer Zentrale aus ein Inspektionsergebnis übermittelt, welches dann von der entsprechenden Inspektionsobjektumleitungseinrichtung umgesetzt wird. Liegt beispielsweise ein negatives oder nicht eindeutig positives Inspektionsergebnis vor, so kann die Inspektionsobjektumleitungseinrichtung entfernt angesprochen werden und das entsprechende Inspektionsobjekt mittels der Rückförderbandeinrichtung Inspektionspersonal vor Ort zuführen. Somit ist es möglich mehrere Inspektionseinheiten von einer zentralen Stelle aus zu inspizieren. Ferner ist es alternativ oder zusätzlich möglich, dass falls Inspektionspersonal Zweifel an einem Gefährdungspotenzial hat, ein entsprechendes Abbild einer zentralen Einheit vorgelegt werden kann, die dann das Inspektionsergebnis übermittelt und die Fördervorrichtung entsprechend ansteuert.

Die Aufgabe wird auch gelöst durch ein Verfahren nicht gemäß der Erfindung zum Betreiben einer Fördervorrichtung zur effizienten Zuführung einer Mehrzahl von zu inspizierenden Inspektionsobjekten zu einer Inspektionsvorrichtung, umfassend eine Hauptförderbandeinrichtung eingerichtet zur sequenziellen Zuführung der Mehrzahl von zu inspizierenden Inspektionsobjekten zu der Inspektionsvorrichtung, wobei mindestens eine Nebenförderbandeinrichtung betrieben wird, die derart an die Hauptförderbandeinrichtung angeschlossen ist, dass weitere Inspektionsobjekte in die sequenzielle Zuführung eingebracht werden.

Die Aufgabe wird auch gelöst durch ein Computerprogrammprodukt nicht gemäß der Erfindung mit

Steuerbefehlen, welche eines der vorstehend diskutierten Verfahren ausführen, wenn sie auf einem Computer zur Ausführung gebracht werden bzw. die vorgeschlagene Fördervorrichtung betreiben.

Hierbei ist es besonders vorteilhaft, dass das Verfahren Verfahrensschritte vorsieht, welche die strukturellen Merkmale der Fördervorrichtung umsetzen bzw. ansteuern. Ferner umfasst die Fördervorrichtung strukturelle Merkmale, welche auch mittels des vorgeschlagenen Verfahrens umgesetzt bzw. implementiert werden können. Obgleich die vorstehende allgemeine Beschreibung beispielhaft anhand von Gepäckstücken von Passagieren an einem Check-Point erfolgt ist, ist es für den Fachmann klar, dass die vorstehend erläuterten Prinzipien nicht gemäß der Erfindung entsprechend auf ein

Umschlagsystem für Frachtgüter im Allgemeinen übertragen werden kann. Dort werden ebenfalls mit unterschiedlichem Aufkommen an einer Eingangsseite Frachtstücke zugeführt und über Fördereinrichtungen zu entsprechenden Zielorten gefördert, wobei der Weg dorthin, ebenfalls durch wenigstens eine Inspektionsvorrichtung zur Inspektion des Frachtstücks führt. Zielort kann beispielsweise an einem Flughafen der einem bestimmtem Flugzeug zugeordnete Sammelplatz für in den Frachtraum des Flugzeugs zu verbringenden Frachtstücke sein.

### Bevorzugte Ausführungsbeispiele

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist.

Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.
Figur 1 zeigt in einer Draufsicht eine Fördervorrichtung gemäß einem Aspekt der vorliegenden Erfindung.
Figur 2 zeigt in einer Draufsicht eine weitere Anordnung einer Fördervorrichtung, wobei eine erste Nebenförderbandeinrichtung in eine zweite
Nebenförderbandeinrichtung gemäß einem Aspekt der vorliegenden Erfindung mündet.
Figur 3 zeigt eine weitere Ausgestaltung der erfindungsgemäßen Fördervorrichtung in einer Draufsicht.
Figur 4 zeigt die Fördervorrichtung in einer Draufsicht mitsamt einer Inspektionsvorrichtung und einer Rückförderbandeinrichtung gemäß einem Aspekt der vorliegenden Erfindung.

Die in den Figuren angegebenen Maßangaben sind Millimeter und sollen lediglich eine grobe Vorstellung für die räumliche Ausgestaltung der Ausführungsbeispiele dienen. Die Maßangaben sind keines falls einschränkend und erst recht nicht derart zu verstehen, dass eine Ausführung nur mit genau diesen Abmessungen möglich oder sinnvoll wäre. Dem Fachmann ist klar, dass bei einer konkreten Ausführung andere hier nicht wesentliche Aspekte Einfluss auf die jeweiligen Abmessungen haben werden, ohne jedoch die hier vorgeschlagenen Prinzipien zu beeinflussen oder zu negieren.

Die folgende Beschreibung von bevorzugten Ausführungsbeispielen erfolgt beispielhaft anhand von Gepäckstücken als Beispiel für Inspektionsobjekte von Passagieren an einem Check-Point, beispielsweise an einem Flughafen. Dabei ist es für den Fachmann ohne weiteres möglich, die erläuterten Ausführungsbeispiele nicht gemäß der Erfindung entsprechend zu Verallgemeinern und beispielsweise auf ein Umschlagsystem für Frachtgüter zu übertragen. In einem Umschlagsystem für Frachtgüter, beispielsweise ebenfalls an einem Flughafen, werden entsprechend dem aktuellen Aufkommen an einer Eingangsseite Frachtstücke zugeführt und über Fördereinrichtungen zu vorbestimmten Zielorten gefördert. Der Weg zum Zielort führt ein Frachtstück dann ebenfalls durch wenigstens eine Inspektionsvorrichtung zur Inspektion des Frachtstücks. Zielort kann beispielsweise an einem Flughafen der einem bestimmtem Flugzeug zugeordnete Sammelplatz für in den Frachtraum des Flugzeugs zu verbringenden Frachtstücke sein. Damit besteht das im Zusammenhang mit Handgepäck an einem Check-Point für Passagiere erläuterte Effizienzproblem entsprechend auch bei einem Umschlagsystem für Frachtstücke und ist entsprechend den hier vorgeschlagenen Verbesserungen zur Effizienzsteigerung zugänglich.

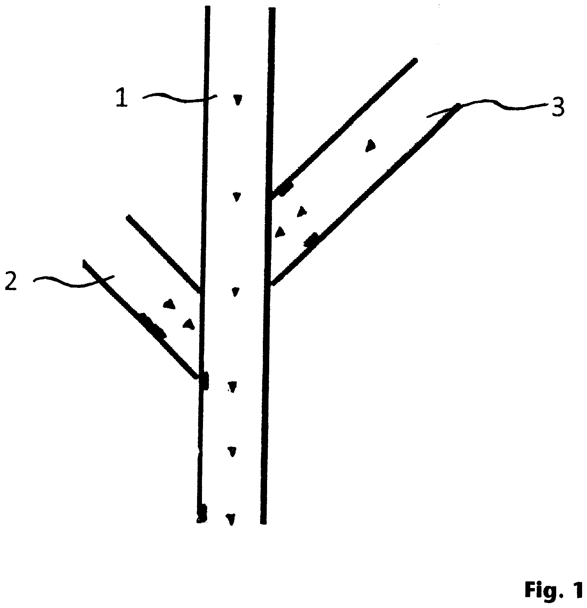

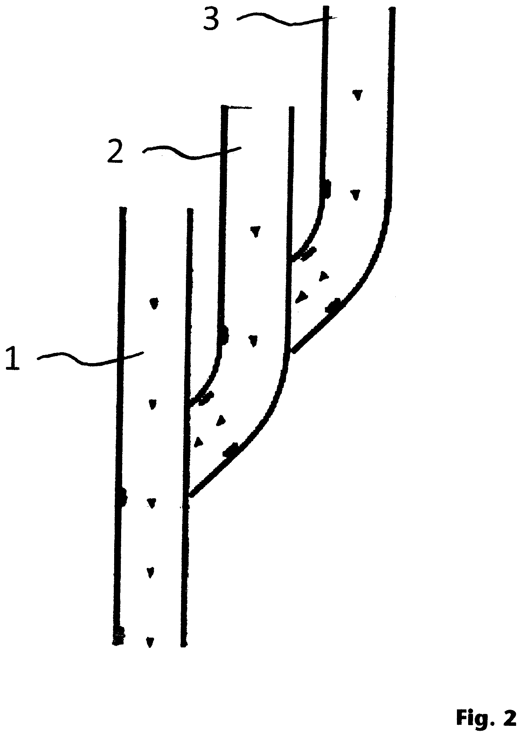

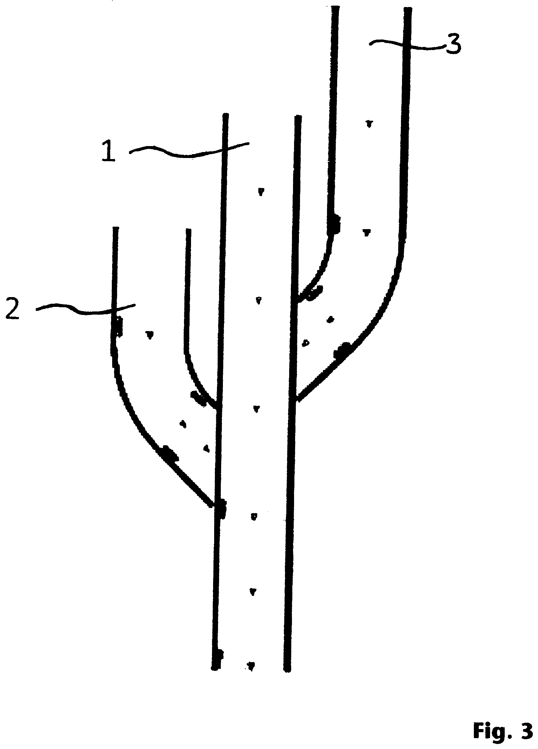

Figur 1 zeigt in einer schematischen Ausgestaltung das erfindungsgemäße Zuführen der Mehrzahl von zu inspizierenden Gepäckstücke mittels einer Hauptförderbandeinrichtung 1, welche mittig angeordnet ist, mittels weiterer Nebenförderbandeinrichtungen 2 und 3, welche derart versetzt bezüglich der Hauptförderbandeinrichtung 1 angeordnet sind, dass ein kontinuierlicher Strom von Gepäckstücken entsteht. In der vorliegenden Figur 1 wäre die Inspektionsvorrichtung, welche in Figur 1 (sowie ebenfalls in den Figuren 2 und 3)nicht gezeigt ist, unten angeordnet. Somit legen die Passagiere ihre Inspektionsobjekte sowohl auf die Hauptförderbandeinrichtung 1 als auch jeweils auf die Nebenförderbandeinrichtungen 2 und 3. Hierbei ist es auch möglich mindestens eine der Nebenförderbandeinrichtungen 2 und 3 zu deaktivieren.

Entsteht nun im Strom der Gepäckstücke eine Lücke auf der Hauptförderbandeinrichtung 1 so sind die beiden Nebenförderbandeinrichtungen 2 und 3 derart ausgestaltet, dass sie eine solche Lücke ausnutzen und ein eigenes Gepäckstück in diese Lücke derart platzieren, dass sie das Gepäckstück derart der Hauptförderbandeinrichtung 1 zuführen, dass das Gepäckstück in der Lücke zum Liegen kommt.

Hierzu kann die Transportgeschwindigkeit der einzelnen Bänder derart variiert werden, dass die vorhandenen Lücken möglichst gut gefüllt werden.

Figur 2 zeigt in einer schematischen Draufsicht, dass eine erste Nebenförderbandeinrichtung 2, welche in die Hauptförderbandeinrichtung 1 mündet, mit einer weiteren Nebenförderbandeinrichtung 3 verbunden sein kann. Somit ist die Nebenförderbandeinrichtungen 3 ausgestaltet Lücken im Strom der Gepäckstücke der Nebenförderbandeinrichtungen 2 auszufüllen. Ferner ist die Nebenförderbandeinrichtung 2 ausgestaltet Lücken in der Hauptförderbandeinrichtung 1 auszufüllen. Auf diese Art und Weise lassen sich beliebig viele Förderbänder derart kombinieren, dass das Hauptförderband bzw. die Hauptförderbandeinrichtung 1 einen möglichst lückenlosen Strom von Gepäckstücken aufweist. Somit ist es also möglich eine Inspektionsvorrichtung erfindungsgemäß besonders vorteilhaft auszunutzen, da typischerweise ein kontinuierlicher Strom an Inspektionsobjekten einer Verarbeitung zugeführt wird.

Figur 3 zeigt in einer schematischen Draufsicht eine weitere Ausgestaltung der entsprechenden Förderbandeinrichtungen, die in etwa der Ausgestaltung gemäß

Figur 1 entspricht. Wie in allen Figuren ersichtlich ist, ist zwischen den einzelnen Förderbandeinrichtungen derart viel Platz, dass Passagiere die Förderbandeinrichtungen zumindest von zwei Seiten bedienen können. Insgesamt ist es möglich, die Ausgestaltungen gemäß Figuren 1, 2 und 3 zu kombinieren.

Beispielsweise kann eine Verzweigung wie sie in Figur 2 gezeigt ist auch auf die Ausgestaltung gemäß Figur 1 angewendet werden.

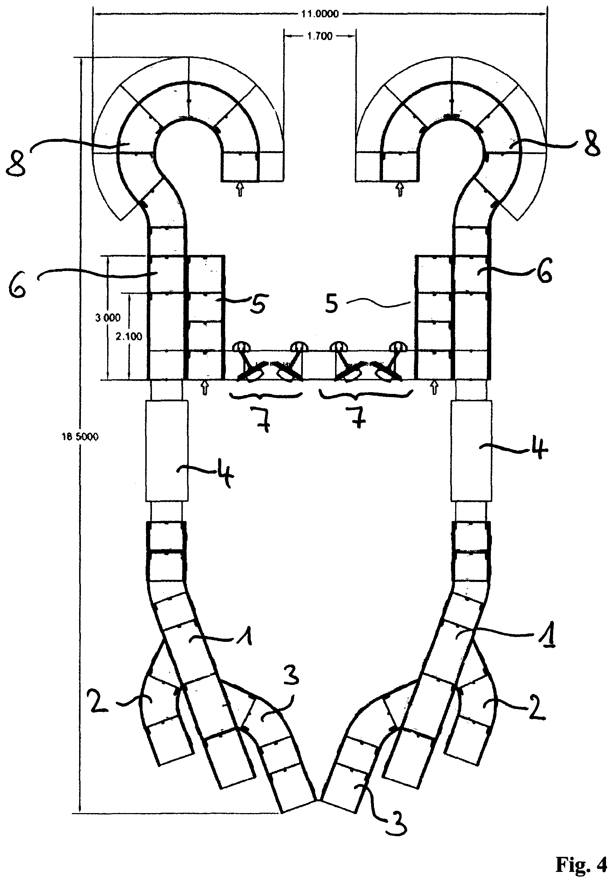

Figur 4 zeigt die erfindungsgemäße Fördervorrichtung in einer schematischen Draufsicht, wobei eine Inspektionsvorrichtung 4 oben angeordnet ist und auf der linken Seite die Rückförderbandeinrichtung 5 angeordnet ist. Die Rückförderbandeinrichtung 5 wird durch eine Umleitungseinrichtung 6 beschickt, welche eingerichtet ist, ein Gepäckstück, dass von der Inspektionsvorrichtung 4 negativ oder nicht eindeutig positiv beurteilt werden konnte, von der

Hauptförderbandeinrichtung 1 abzuziehen und der Rückförderbandeinrichtung 5 zuzuführen. Im in der Figur 4 gezeigten Ausführungsbeispiel ist es möglich, dass Passagiere in unten eines der Förderbänder 1, 2, 3 beladen und das nach der Inspektionsvorrichtung 4 bei einem negativen Inspektionsergebnis ein möglicherweise gefährliches Gepäckstück vermittels der Umleitungseinrichtung 6 von der Hauptförderbandeinrichtung 1 nach links auf die Rückförderbandeinrichtung 5 verschoben wird und dann von oben nach unten in Richtung vor die Inspektionsvorrichtung 4 verbracht wird. Somit kann das Inspektionsobjekt einer manuellen Inspektion an Nachkontrollarbeitsplätzen 7 zugeführt werden und/oder erneut der Inspektionsvorrichtung 4 zugeführt werden.

In der vorliegenden Figur 4 sind keine Arbeitsplätze für die Bedienpersonen der Inspektionsvorrichtungen 4 eingezeichnet, welche die Inspektionsvorrichtung 4 ansteuern bzw. auslesen können. Diese Bedienerarbeitsplätze sind entfernt an einem abgesetzten Ort zentral angeordnet. Selbstverständlich kann aber auch ein jeweiliger Bedienerarbeitsplatz an oder in unmittelbarer Nähe zur zugehörigen Inspektionsvorrichtung 4 angeordnet sein. Mit anderen Worten sind die Bedienarbeitsplätze entfernt angeordnet und entsprechend netzwerktechnisch mit den hier vorgeschlagenen Vorrichtungen bzw. Einrichtungen gekoppelt.

Von den (in Figur 4 nicht gezeigten) Bedienarbeitsplätzen aus ist es möglich zu entscheiden, ob ein entsprechendes Gepäckstück positiv oder negativ inspiziert wird.

In der vorliegenden Figur 4 wird die Ausgestaltung der Fördervorrichtung gemäß Figur 3 verwendet, wobei die Transportrichtung in der Figur 4 entgegen der Figuren 1 bis 3 von unten nach oben ist.

Das obere Ende der Hauptförderbandeinrichtung 1 wird von einer Gepäckausgabevorrichtung 8 gebildet, deren Verlauf des Förderwegs in der Figur 4 die Form eines Rundhakens oder Fragezeichens bzw. gespiegelten Fragezeichens aufweist. Die Form der Gepäckausgabevorrichtung 8 ist besonders platzeffizient, da sie im äußeren Umfangsbereich einen entsprechend vergrößerten Zugangsbereich für die Passagiere schafft, die ihre inspizierten Gepäckstücke wieder aufnehmen. Bei einer entsprechenden Dimensionierung für eine zu erwartendes Passagier und damit Gepäckaufkommen kann weitestgehend ein Rückstau von Inspektionsobjekten zur Inspektionsvorrichtung 4 vermeiden werden.

Ferner wird ein Verfahren nicht gemäß der Erfindung zum Betreiben einer Fördervorrichtung zur effizienten Zuführung einer Mehrzahl von zu inspizierender Gepäckstücke zu einer Inspektionsvorrichtung 4 vorgeschlagen, umfassend eine Hauptförderbandeinrichtung 1, die zur sequenziellen Zuführung der Mehrzahl von zu inspizierenden Gepäckstücken zu der Inspektionsvorrichtung 4 eingerichtet ist, wobei mindestens eine Nebenförderbandeinrichtung 2, 3 betrieben wird, die derart an die Hauptförderbandeinrichtung 1 angeschlossen ist, dass weitere Gepäckstücke in die sequenzielle Zuführung eingebracht werden. Der Fachmann erkennt hierbei, dass weitere Verfahrensschritte notwendig sein können und insbesondere, dass einzelne Verfahrensschritte iterativ ausgeführt werden können.

## Patentansprüche

1. System mit einer Inspektionsvorrichtung (4) und einer Fördervorrichtung zur effizienten Zuführung einer Mehrzahl von Gepäckstücken als zu inspizierende inspektionsobjekte zu der Inspektionsvorrichtung (4), wobei die Fördervorrichtung eine Hauptförderbandeinrichtung (1), die zur sequentiellen Zuführung der Mehrzahl von zu inspizierenden Inspektionsobjekten zu der Inspektionsvorrichtung (4) eingerichtet ist, und mindestens eine Nebenförderbandeinrichtung (2, 3), die derart an die Hauptförderbandeinrichtung (1) angeschlossen ist, dass weitere Inspektionsobjekte in die sequentielle Zuführung einbringbar sind, und stromabwärts nach der Inspektionsvorrichtung (4) eine Gepäckausgabevorrichtung (8) umfasst, **dadurch gekennzeichnet, dass** ein Ende der Hauptförderbandeinrichtung (1) stromabwärts nach der Inspektionsvorrichtung (4) von der Gepäckausgabevorrichtung (8) gebildet ist, deren Verlauf des Förderwegs für einen entsprechend vergrößerten Zugangsbereich zur Aufnahme inspizierter Gepäckstücke eine Form aus der Gruppe aufweist, die besteht aus: einem Rundhakens, einem Fragezeichens und einem gespiegelten Fragezeichens.

2. System gemäß Anspruch 1, wobei mindestens zwei Nebenförderbandeinrichtungen (2, 3) vorgesehen sind, welche derart versetzt bezüglich der Hauptförderbandeinrichtung (1) angeordnet sind, dass diese die jeweils weiteren Inspektionsobjekte an unterschiedlichen Abschnitten der Hauptförderbandeinrichtung (1) einbringen.

3. System gemäß Anspruch 1 oder 2, wobei die Hauptförderbandeinrichtung (1) und die mindestens eine Nebenförderbandeinrichtung (2, 3) derart zueinander beabstandet angeordnet sind, dass diese jeweils zumindest teilweise von mindestens zwei Seiten für eine Zufuhr von Inspektionsobjekten zugänglich sind.

4. System gemäß mindestens einem der Ansprüche 1 bis 3, wobei die Hauptförderbandeinrichtung (1) und die mindestens eine Nebenförderbandeinrichtung (2, 3) jeweils unabhängig voneinander in ihrer Transportgeschwindigkeit variierbar sind.

5. System gemäß mindestens einem der Ansprüche 1 bis 4, wobei die Hauptförderbandeinrichtung (1) und die mindestens eine Nebenförderbandeinrichtung (2, 3) jeweils derart in ihrer Transportgeschwindigkeit variierbar sind, dass auf der Hauptförderbandeinrichtung (1) eine möglichst fortlaufende Sequenz von zu inspizierenden Inspektionsobjekten entsteht.

6. System gemäß mindestens einem der Ansprüche 1 bis 5, wobei zu inspizierende Inspektionsobjekte mittels Wannen gruppenweise zusammengefasst werden und eine Wannenrückführungseinrichtung die Wannen im Wesentlichen in entgegengesetzter Transportrichtung zur Hauptförderbandeinrichtung (1) bewegt.

7. System gemäß Anspruch 6, wobei für jede Förderbandeinrichtung (1, 2, 3) eine gesonderte Wannenrückführungseinrichtung vorgesehen ist.

8. System gemäß mindestens einem der Ansprüche 1 bis 7, wobei an die Inspektionsvorrichtung (4) eine Inspektionsobjektumleitungseinrichtung (6) gekoppelt ist, weiche eingerichtet ist, Inspektionsobjekte bei negativem Inspektionsergebnis von der Hauptförderbandeinrichtung (1) abzuleiten.

9. System gemäß Anspruch 8, wobei für die weitere Ableitung eine Rückförderbandeinrichtung (5) an die Inspektionsobjektumleitungseinrichtung (6) gekoppelt ist.

10. System gemäß Anspruch 9, wobei die Rückförderbandeinrichtung (5) Inspektionsobjekte im Wesentlichen entgegen der Transportrichtung der Hauptförderbandeinrichtung (1) wieder vor die Inspektionsvorrichtung (4) für eine weitere Inspektion an eine Nachkontrollstell und/oder für eine erneute Inspektion durch die Inspektionsvorrichtung (4) bewegt.

11. System gemäß Anspruch 10, wobei die Rückförderbandeinrichtung (5) eine Ausgabestelle (7) zur manuellen Inspektion von Inspektionsobjekten umfasst.

12. System gemäß mindestens einem der Ansprüche 1 bis 11, wobei die Inspektionsvorrichtung (4) mehrere Inspektionseinheiten umfasst, welche jeweils zum Inspizieren mindestens eines Inspektionsobjekts eingerichtet sind.

13. System gemäß Anspruch 12, wobei die inspektionsvorrichtung (4) und/oder die Inspektionseinheiten entfernt angesteuert werden können und für jedes Inspektionsobjekt entfernt ein positives oder ein negatives Inspektionsergebnis übermittelt werden kann.

## Claims

1. A System comprising an inspection device (4) and a conveyor device for efficiently feeding a plurality of baggage items as inspection objects to be inspected to the inspection device (4), wherein the conveyor device comprises a main conveyor belt device (1) which is arranged to sequentially feed the plurality of inspection objects to be inspected to the inspection device (4) and at least one secondary conveyor belt device (2, 3), which is connected to the main conveyor belt device (1) in such a way that further inspection objects can be introduced into the sequential feed, and downstream of the inspection device (4) comprises a baggage delivery device (8),
**characterized in that** one end of the main conveyor (1) downstream after the inspection device (4) is formed by the baggage delivery device (8), whose course of the conveyor path for a correspondingly enlarged access area for receiving inspected baggage items has a shape from the group consisting of: a round hook, a question mark and a mirrored question mark.

2. System according to claim 1, wherein at least two secondary conveyor belt devices (2, 3) are provided, which are arranged offset with respect to the main conveyor belt device (1) in such a way that they introduce the respective further inspection objects at different sections of the main conveyor belt device (1).

3. System according to claim 1 or 2, wherein the main conveyor belt device (1) and the at least one secondary conveyor belt device (2, 3) are arranged at a distance from one another in such a way that they are each at least partially accessible from at least two sides for a feed of inspection objects.

4. System according to at least one of the claims 1 to 3, wherein the main conveyor belt device (1) and the at least one secondary conveyor belt device (2, 3) can each be varied independently of one another in their transport speed.

5. System according to at least one of the claims 1 to 4, wherein the main conveyor belt device (1) and the at least one secondary conveyor belt device (2, 3) can each be varied in their transport speed in such a way that a sequence of inspection objects to be inspected, which is as continuous as possible, is produced on the main conveyor belt device (1).

6. System according to at least one of the claims 1 to 5, wherein inspection objects to be inspected are grouped together by means of trays and a tray return device moves the trays essentially in the opposite transport direction to the main conveyor belt device (1).

7. System according to claim 6, wherein a separate tray return device is provided for each conveyor belt device (1, 2, 3).

8. System according to at least one of the claims 1 to 7, wherein an inspection object diversion device (6) is coupled to the inspection device (4), which is arranged to divert inspection objects from the main conveyor belt device (1) in the event of a negative inspection result.

9. System according to claim 8, wherein for the further diversion a return conveyor belt device (5) is coupled to the inspection object diversion device (6).

10. System according to claim 9, wherein the return conveyor belt means (5) moves inspection objects substantially against the transport direction of the main conveyor belt means (1) back in front of the inspection device (4) for further inspection to a post inspection station and/or for re-inspection by the inspection device (4).

11. System according to claim 10, wherein the return conveyor device (5) comprises an output point (7) for manual inspection of inspection objects.

12. System according to at least one of claims 1 to 11, wherein the inspection device (4) comprises a plurality of inspection units, each configured for inspecting at least one inspection object.

13. System according to claim 12, wherein the inspection device (4) and/or the inspection units can be remotely controlled and a positive or a negative inspection result can be remotely transmitted for each inspection object.

## Revendications

1. Système ayant un dispositif d'inspection (4) et un dispositif de convoyage pour l'acheminement d'une pluralité de pièces de bagages, en tant qu'objets d'inspection à inspecter, vers le dispositif d'inspection (4), cependant que le dispositif de convoyage comprend un équipement principal de bande convoyeuse (1) équipé pour l'acheminement séquentiel de la pluralité d'objets d'inspection à inspecter vers le dispositif d'inspection (4), et au moins un équipement auxiliaire de bande convoyeuse (2, 3) raccordé de telle façon à l'équipement principal de bande convoyeuse (1) que d'autres objets d'inspection peuvent être introduits dans l'acheminement séquentiel, et en aval après le dispositif d'inspection (4) un dispositif de délivrance de bagages (8),
**caractérisé en ce qu'**une extrémité de l'équipement principal de bande convoyeuse (1) est constituée en aval après le dispositif d'inspection (4) par le dispositif de délivrance de bagages (8) dont le tracé du trajet de convoyage, pour une zone d'accès agrandie en conséquence pour la réception de pièces de bagages inspectées, présente une forme comprise dans le groupe consistant en un hameçon, en un point d'interrogation ou en un point d'interrogation en miroir.

2. Système selon la revendication 1, cependant qu'au moins deux équipements auxiliaires de bande convoyeuse (2, 3) sont prévus, lesquels sont agencés de telle façon de manière décalée par rapport à l'équipement principal de bande convoyeuse (1) qu'ils introduisent respectivement d'autres objets d'inspection à différentes sections de l'équipement principal de bande convoyeuse (1).

3. Système selon la revendication 1 ou 2, cependant que l'équipement principal de bande convoyeuse (1) et le au moins un équipement auxiliaire de bande convoyeuse (2, 3) sont agencés de telle façon de manière espacés entre eux qu'ils sont respectivement accessibles au moins partiellement depuis au moins deux côtés pour une alimentation en objets d'inspection.

4. Système selon au moins une des revendications de 1 à 3, cependant que l'équipement principal de bande convoyeuse (1) et le au moins un équipement auxiliaire de bande convoyeuse (2, 3) peuvent être amenés à varier respectivement indépendamment l'un de l'autre quant à leur vitesse de transport.

5. Système selon au moins une des revendications de 1 à 4, cependant que l'équipement principal de bande convoyeuse (1) et le au moins un équipement auxiliaire de bande convoyeuse (2, 3) peuvent être amenés à varier respectivement de telle façon quant à leur vitesse de transport que, sur l'équipement principal de bande convoyeuse (1), une séquence aussi continue que possible d'objets d'inspection à inspecter est engendrée.

6. Système selon au moins une des revendications de 1 à 5, cependant que des objets d'inspection à inspecter sont rassemblés en groupes au moyen de bacs, et un équipement de réacheminement de bacs déplace les bacs essentiellement dans la direction de transport opposée à celle de l'équipement principal de bande convoyeuse (1).

7. Système selon la revendication 6, cependant que, pour chaque équipement de bande convoyeuse (1, 2, 3), un équipement distinct de réacheminement de bacs est prévu.

8. Système selon au moins une des revendications de 1 à 7, cependant que, au dispositif d'inspection (4), un équipement de réaiguillage d'objets d'inspection (6) est couplé, lequel est équipé pour évacuer des objets d'inspection hors de l'équipement principal de bande convoyeuse (1) en cas de résultat d'inspection négatif.

9. Système selon la revendication 8, cependant que, pour la poursuite de l'évacuation, un équipement de bande de récupération (5) est couplé à l'équipement de réaiguillage d'objets d'inspection (6).

10. Système selon la revendication 9, cependant que l'équipement de bande de récupération (5) déplace des objets d'inspection essentiellement dans le sens inverse à la direction de transport de l'équipement principal de bande convoyeuse (1) à nouveau devant le dispositif d'inspection (4) pour une autre inspection à un emplacement de contrôle subséquent et/ou pour une nouvelle inspection par le dispositif d'inspection (4).

11. Système selon la revendication 10, cependant que l'équipement de bande de récupération (5) comprend un emplacement de délivrance (7) pour l'inspection manuelle d'objets d'inspection.

12. Système selon au moins une des revendications de 1 à 11, cependant que le dispositif d'inspection (4) comprend plusieurs unités d'inspection qui sont respectivement équipées pour l'inspection d'au moins un objet d'inspection.

13. Système selon la revendication 12, cependant que le dispositif d'inspection (4) et/ou les unités d'inspection peuvent être commandés à distance, et pour chaque objet d'inspection un résultat d'inspection positif ou négatif peut être transmis à distance.
